# EUROPÄISCHE PATENTANMELDUNG

(11) **EP 1 967 692 A2**
(43) Veröffentlichungstag der Anmeldung: **10.09.2008**
(21) Anmeldenummer: 08150878.0
(22) Anmeldetag: 31.01.2008
(51) Int. Cl.: F01D 1/32, F01D 5/08

(54) **Turbinenschaufel mit im Schaufelfuß ausgebildeter Mikroturbinendüse**

(30) Priorität: 09.03.2007 DE 102007012320
(71) Anmelder: Rolls-Royce Deutschland Ltd & Co KG, 15827 Blankenfelde-Mahlow (DE)
(72) Erfinder: Whitton, Richard, 12305, Berlin (DE)
(74) Vertreter: Wablat, Wolfgang

(57) **Zusammenfassung**

Eine Turbinenschaufel mit im Schaufelfuß (2) gekrümmt und konvergierend ausgebildeter Mikroturbinendüse umfasst einen von einer Kühlluftkammer (3) im Schaufelfuß ausgehenden Durchgangskanal (6) mit großem Durchmesser, in den ein separat vorgefertigtes Mikroturbinendüsenteil (7) mit minimiertem, in der Größe variabel auf die jeweiligen Betriebsbedingungen abgestimmtem Strömungsquerschnitt eingefügt ist. Aufgrund des minimierbaren, auf die tatsächlichen Erfordernisse einstellbaren Luftmassenstroms in den Raum zwischen den Turbinenlaufrädern werden die Luftverluste verringert und der Wirkungsgrad verbessert.

## Beschreibung

Die Erfindung betrifft eine Turbinenschaufel mit einer im Schaufelfuß gekrümmt und konvergierend ausgebildeten, ausgehend von einer Kühlluftkammer im Schaufelfuß stromab entgegen der Drehrichtung des Turbinenlaufrades mündenden Mikroturbinendüse.

Bei einem aus der US 6 290 464 B1 bekannten Gasturbinentriebwerk ist in den Schaufelfüßen der Turbinenschaufeln des Turbinenlaufrades der ersten Stufe jeweils ein von einer Kühlkammer abzweigender, stromab mündender Kühlluftkanal ausgebildet, über den ein Teil der in die Turbinenschaufel eingeführten Kühlluft der nächsten Turbinenstufe zugeführt wird. Dieser Kühlluftkanal, der von einer Kühlluftkammer im Schaufelfuß ausgeht, ist zur Luftaustrittsseite hin zum einen konvergierend und darüber hinaus derart stetig gekrümmt ausgebildet, dass die Kühlluft entgegen der Drehrichtung des Turbinenlaufrades austritt. Aufgrund der im Ergebnis der gekrümmten und konvergierenden Ausbildung des Kühlkanals stetigen Kühlluftumlenkung entgegen der Laufradrotation und der Entspannung der Kühlluft verrichtet die Kühlluft Arbeit. Die so in den Schaufelfüßen ausgebildete Mikroturbine stellt ein zusätzliches Antriebselement für das erste Turbinenlaufrad dar. Gleichzeitig wird die Kühlluft entsprechend dem Turbinenprinzip abgekühlt und steht daher mit verbesserter Kühlwirkung zur Kühlung des Laufrads der nachfolgenden Turbinenstufe zur Verfügung.

Die Herstellung eines derart gekrümmten und sich zur Luftaustrittsseite hin verjüngenden Kühlluftkanals in den Schaufelfüßen bereitet jedoch insofern Schwierigkeiten, als beim Feingießen von Turbinenschaufeln nach dem Wachsausschmelzverfahren die sehr schlanken und zudem spröden Keramikkerne für die Ausbildung der sehr dünnen Kühlluftkanäle leicht brechen können und somit eine Fertigung mit herkömmlichen Feingießverfahren nicht möglich ist. Auch die Herstellung des konvergierend und gekrümmt verlaufenden Kühlluftkanals unmittelbar im Schaufelfuß mit spanenden Bearbeitungsverfahren ist nur in begrenztem Umfang möglich und auf größere Durchmesser beschränkt, zumal der kleinere Durchmesser durch die Auslassöffnung gebildet wird. Mit den bekannten Gießverfahren und mechanischen Bearbeitungsverfahren ist unmittelbar im Schaufelfuß nur die Herstellung von Kühlluftkanälen mit größerem Durchmesser realisierbar. Dadurch sind jedoch die Kühlluftverluste hoch und der Wirkungsgrad der Turbine wird verringert. Die in der US 6 290 464 ebenfalls vorgeschlagene Ausbildung der Mikroturbinendüsen in Turbinenhalte- oder -abdeckplatten ist auf ein Design beschränkt, das für diese Platten selbst vorgesehen ist. Dadurch ist die Effizienz der Mikroturbinendüsen eingeschränkt.

Der Erfindung liegt die Aufgabe zugrunde, die Mikroturbinendüse im Schaufelfuß so auszubilden, dass geringe Kanalquerschnitte und damit geringe Kühlluftverluste und ein verbesserter Triebwerkswirkungsgrad erreicht werden können.

Erfindungsgemäß wird die Erfindung mit einer Turbinenschaufel gelöst, deren Schaufelfuß gemäß den Merkmalen des Patentanspruchs 1 ausgebildet ist.

Der Kern der Erfindung besteht darin, dass die Turbinenschaufel mit der Mikroturbinendüse nicht einstückig geformt ist, sondern in dem für die Mikroturbinendüse vorgesehenen Bereich des Schaufelfußes ein von der Kühlluftkammer bis zur stromabwärtigen Seite des Schaufelfußes verlaufender gebohrter oder integral im Gießprozess erzeugter Durchgangskanal mit großem Durchmesser ausgebildet ist, in den ein separat hergestelltes, in der Größe des konvergierenden Düsenquerschnitts minimiertes und flexibles, das heißt an die geforderten Betriebsbedingungen angepasstes Mikroturbinendüsenteil ganz oder auch teilweise eingefügt ist.

Die Herstellung von Turbinenschaufeln mit in den Schaufelfuß einstückig integrierter Mikroturbinendüse nach den bekannten Feingießverfahren lässt nur große, der Effizienz des Triebwerks entgegenstehende Düsenquerschnitte zu. Ein wesentlicher Vorteil der erfindungsgemäß ausgebildeten Turbinenschaufel ist die flexible, an die jeweiligen Betriebsbedingungen anpassbare Querschnittsgröße der Mikroturbinendüse mit Hilfe eines in einen Durchgangskanal eingefügten separat gefertigten Mikroturbinendüsenteils. Aufgrund eines gegenüber dem Stand der Technik minimierbaren Düsenquerschnitts ist es nicht erforderlich, den Druck der zugeführten Kühlluft zu reduzieren, was eine Verringerung des Wirkungsgrads zur Folge hätte. Der in den Raum zwischen den beiden Turbinenlaufrädern eingeleitete Kühlluftmassenstrom kann so niedrig wie erforderlich eingestellt werden, so dass Kühlluftverluste und eine Verringerung des Turbinenwirkungsgrads vermieden werden.

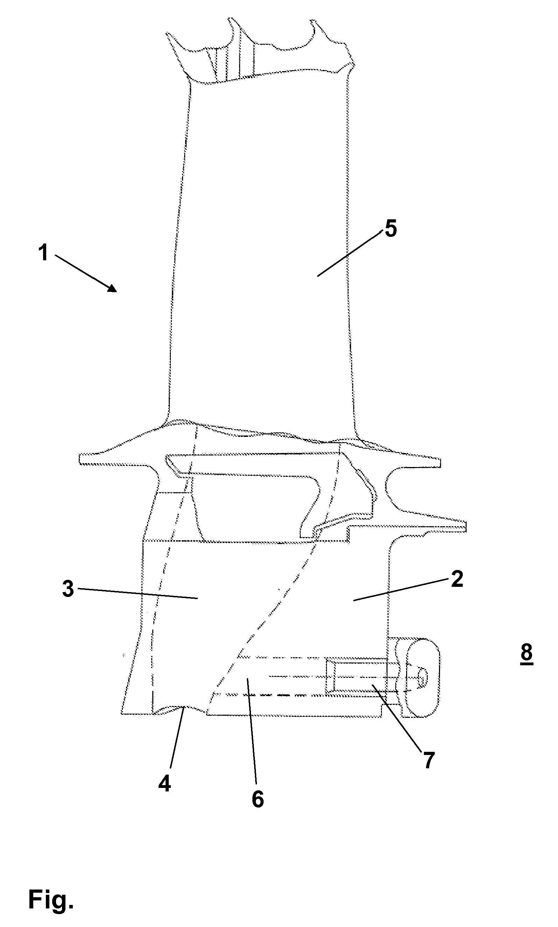

Ein Ausführungsbeispiel der Erfindung wird anhand der Zeichnung, in deren einziger Figur eine Turbinenschaufel mit einer erfindungsgemäß mittels eines separat gefertigten Bauteils in den Schaufelfuß integrierten Mikroturbinendüse dargestellt ist, näher erläutert.

Die Zeichnung zeigt eine Turbinenschaufel 1 der ersten Turbinenstufe mit einer im Schaufelfuß 2 ausgebildeten Kühlluftkammer 3, die über eine Öffnung 4 im Schaufel fuß 2 kontinuierlich mit Kühlluft versorgt wird. Ein Teil der Kühlluft wird zur Kühlung des Schaufelblattes 5 benutzt, während ein anderer Teil der Kühlluft über den von der Kühlluftkammer 3 abzweigenden Durchgangskanal 6 und ein in diesen teilweise integriertes MikroturbinenDüsenteil 7 in den Raum 8 zwischen der ersten und der zweiten Turbinenstufe und von dort in den Schaufelfuß der Turbinenschaufeln der zweiten Turbinenstufe (nicht dargestellt) gelangt.

Die Turbinenschaufeln 1 werden in einem Gießverfahren hergestellt, und zwar jeweils mit Durchgangskanälen 6, die einen ausreichend großen Durchmesser aufweisen. Der Keramikkern für das Gießen des Durchgangskanals 6 kann daher einen entsprechend großen Durchmesser aufweisen und wird somit, weil er über ausreichende Festigkeitseigenschaften verfügt, während des Gießverfahrens nicht beschädigt oder zerstört. Das Mikroturbinendüsenteil 7 ist ein separates, durch spangebende Formgebung auf einfache Weise gefertigtes Bauteil, das in den Durchgangskanal 6 vollständig oder, wie hier, teilweise eingefügt und in diesem durch bekannte Fügeverfahren, hier Löten, befestigt wird.

Abgesehen von den verminderten Fertigungskosten, kann aufgrund der jetzt frei wählbaren Dimensionierung der Mikroturbinendüse die Kühlluftzufuhr zur nachfolgenden Turbinenstufe optimal und variabel entsprechend den geforderten Betriebsbedingungen, jedenfalls ohne unnötige Kühlluftverluste, eingestellt werden.

### Bezugszeichenliste

- 1: Turbinenschaufel
- 2: Schaufelfuß
- 3: Kühlluftkammer
- 4: Öffnung
- 5: Schaufelblatt
- 6: Durchgangskanal
- 7: Mikroturbinendüsenteil
- 8: Raum zwischen Turbinenlaufrädern

## Patentansprüche

1. Turbinenschaufel mit einer im Schaufelfuß gekrümmt und konvergierend ausgebildeten, ausgehend von einer Kühlluftkammer (3) im Schaufelfuß (2) stromab entgegen der Drehrichtung des Turbinenlaufrades mündenden Mikroturbinendüse, **gekennzeichnet durch** einen von der Kühlluftkammer (3) ausgehenden Durchgangskanal (6) mit großem Durchmesser, in den ein separat vorgefertigtes Mikroturbinendüsenteil (7) mit minimiertem, in der Größe variabel auf die jeweiligen Betriebsbedingungen abgestimmbarem Strömungsquerschnitt ganz oder teilweise eingefügt ist.

2. Turbinenschaufel nach Anspruch 1, **dadurch gekennzeichnet, dass** das vorgefertigte Mikroturbinendüsenteil (7) durch einen Fügeprozess fest in den Kühlkanal (6) integriert ist.

3. Turbinenschaufel nach Anspruch 2, **dadurch gekennzeichnet, dass** das Mikroturbinendüsenteil (7) durch Löten mit dem Schaufelfuß (2) verbunden ist.

4. Turbinenschaufel nach Anspruch 1, **dadurch gekennzeichnet, dass** das Mikroturbinendüsenteil (7) aus einem spanlos geformten Rohling durch spangebende Formgebung gefertigt wird.

5. Turbinenschaufel nach Anspruch 1, **dadurch gekennzeichnet, dass** das Mikroturbinendüsenteil (7) aus einem Spritzgusserzeugnis besteht.

6. Turbinenschaufel nach Anspruch 1, **dadurch gekennzeichnet, dass** der Durchgangskanal (6) integral mit dem Gießen der Turbinenschaufel (1) oder in einem Bohrverfahren hergestellt ist.
